# EUROPEAN PATENT APPLICATION

(11) **EP 4 840 621 A2**
(43) Date of publication of application: **18.11.2026**
(21) Application number: 26174638.2
(22) Date of filing: 26.04.2026
(51) Int. Cl.: B29D 99/00, B29C 70/46, B64C 1/06, B29K 101/12, B29L 31/30, B64C 1/00, B64C 1/12

(54) **METHOD FOR MANUFACTURING A THERMOPLASTIC STIFFENER AND A STIFFENED PANEL COMPRISING SUCH A STIFFENER**

(30) Priority: 27.04.2025 FR 2504441
(71) Applicant: Daher Aerospace, 94310 Orly (FR)
(72) Inventor: LEMOINE, Ivain, 44330 VALLET (FR)
(74) Representative: Hamann, Jean-Christophe

(57) **Abstract**

A method is disclosed for manufacturing a stiffener comprising at least two legs, a stiffened panel and a box-shaped structure. The stiffener comprises a profile mode of a composite material with thermoplastic polymer matrix reinforced by continuous fibers, the composite profile being obtained by stamping a substantially planar blank and comprising between the at least two legs on a concave side (301) of the composite profile an inward fillet (330) and on a convex side (302) of the composite profile an outward fillet (340), a radius of the outward fillet being less than or equal to a radius of the inward fillet.

## Description

### Technical field

The disclosure belongs to the field of implementation of composite materials with a thermoplastic polymer matrix.

More particularly, the disclosure relates to the manufacturing of a composite profile comprising a thermoplastic matrix reinforced with continuous fibers that may be assembled by welding, by co-consolidation or equivalent, with another composite structural element, in particular a flat or curved panel, as a rib or a stiffener of the other structural element.

The disclosure is particularly, but not exclusively, intended for aerostructures, for the manufacturing of fuselage panels, wing panels or wing boxes.

### Background art

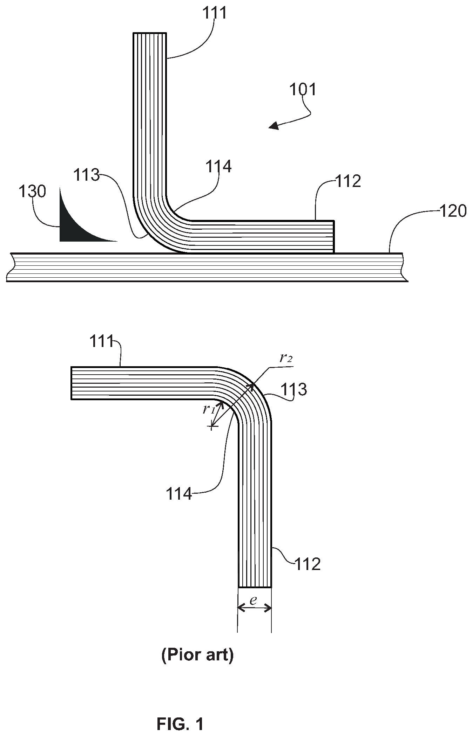

FIG. 1 of the prior art shows a stiffened panel obtained by assembling a stiffener (101) comprising at least 2 legs (111, 112) with a skin (120). The stiffener (101) and the skin (102) may be made of a composite material comprising a polymer matrix reinforced by continuous fibers. The assembling operation may be carried out by welding a flange (112) of the stiffener (101) onto the skin (102) or by a co-consolidation of the stiffener and the skin when at least one of the stiffener and the skin matrices comprises a thermoplastic polymer, or by co-curing the stiffener and the skin if both polymer matrices are of the thermosetting type, without these examples being extensive.

In all cases, the assembly may involve autohesion at an interface between the stiffener (101) and the skin (120), i.e. the molecular chains of at least one of the polymer matrices of the stiffener and the skin may cross the interface.

To achieve such a result, a pressure may be applied at the interface, by acting on a flange (112) of the stiffener which contacts the skin during the assembling operation.

The way such a stiffener may be manufactured, whether by tape laying and consolidation in shape, by stamping a composite planar blank or by fiber placement and in-situ consolidation, produces a connection between the two legs (111, 112) of the profile, in the form of an inward fillet (114) on a concave side of the section and an outward fillet (113) on a convex side.

When the two legs (111, 112) are of a same thickness e, if *r₁* is a radius of the inward fillet (114), a radius *r₂* of outward fillet may be given by Math 1. Math 1: ${r}_{2} = {r}_{1} + e$

Depending on a value of *r₂*, the outward fillet (113) may lead to adverse effects, particularly if *r₂* is greater than a thickness of the legs (111, 112).

During the assembling operation, a pressure may be exerted on the flange (112) contacting the skin to promote autohesion. However, the material comprised between the inward fillet and the outward fillet does not face an opposable support and may be distorted and/or may not reconsolidate properly following the assembly step.

After the assembly step, the wedge-shaped area comprised between the outward fillet (113) and the skin (102) may promote initiation of peeling and crack opening progression phenomena tending to separate the stiffener from the skin (102).

Also, when a compression force is transmitted through the free leg (111) to the skin (102), the outward fillet (113) may give rise to a bending torque at the level of the last contact of the flange (112) contacting the skin.

Under strong compression, this bending torque may lead to a lateral buckling instability of the free leg (111).

To counter these shortcomings, according to prior art, when the stiffener and the skin are made of a composite with a thermosetting polymer matrix, an additional element, commonly referred to as a *"noodle",* may be interposed between the stiffener (101) and the skin (120) at the level of the outward fillet (113), during the preparation of the assembly.

The noodle (130) may, for example, consist of fibers pre-impregnated with the same resin as those of the stiffener (101) and the skin (102), or with a thermosetting resin that is miscible in them and may be obtained, for example, by braiding.

In the case of thermosetting composites this noodle may solve, at least partially, the above-mentioned issues.

The tackiness of the thermosetting resins makes it easy to position and hold the noodle in position when preparing the assembling operation.

Finally, when implementing thermosetting resins, there is no phenomenon of de-consolidation and reconsolidation during assembly, so that the problem of the pressure to be applied during assembly is minimized compared to an assembly of thermoplastic matrix composites.

Thus, a technical solution implementing a noodle, besides the fact that it lengthens the preparation time of the assembling operation, may be effective for thermosetting matrix composites, but may still be insufficient in the case of an assembly implementing thermoplastic polymer matrix composites.

### SUMMARY

In order to solve the disadvantages of the prior art, blank for making a composite profile by stamping the blank, the composite profile comprising a thermoplastic polymer matrix and continuous fibers, and comprising, in a running section, at least two legs extending in intersecting mean directions and connected by an inward fillet on a concave side and by an outward fillet on a convex side a radius of the outward fillet being less than or equal to a radius of the inward fillet, the blank comprising a first lamination of plies of continuous fibers, the first lamination extending in a mean plane over a first width, the blank comprising an area of extra thickness comprising at least one ply of unidirectional fibers oriented parallel to a longitudinal direction, of a reduced width relative to the first width and of a decreasing thickness on either side of an average bending surface, the extra thickness being configured to make the outward fillet upon stamping the blank between a punch and a paired stamping die.

Thus, the localized extra thickness of the blank enables to make a reduced outward fillet radius, solving the prior art insufficiencies. The fillet area is integral with the composite profile that was co-consolidated during stamping and is loaded with reinforcing fibers so that it allows load transfer.

According to some embodiment, the extra thickness area may comprise a second lamination comprising at least one ply of unidirectional fibers interposed between two plies of the first lamination.

According to some other embodiment which may be compatible with the previous embodiment, the extra thickness area may comprise a third lamination comprising at least one ply of unidirectional fibers superimposed on the first lamination.

A tooling configured for stamping a blank for making a composite profile comprising a thermoplastic polymer matrix and continuous fibers, may comprise, in a running section, at least two legs extending in intersecting mean directions and connected by an inward fillet on a concave side and by an outward fillet on a convex side, a radius of the outward fillet being less than or equal to a radius of the inward fillet, the tooling comprising a punch and a paired stamping die, a press for bringing the punch close or apart from the paired stamping die, between an open configuration and a closed configuration, an air gap configured to contain the composite profile between the punch and the paired stamping die in the closed configuration, wherein the punch comprises a connecting fillet centered on an inner bending line between two faces of the punch forming a wedge, the paired stamping die comprising two forming faces, distant from the two faces of the punch by a thickness of the air gap when the tooling is in the closed configuration, the two forming faces being connected by a die bottom fillet, wherein a radius of the die bottom fillet is less than or equal to a radius of the connecting fillet
According to a variant of the tooling, the stamping die may comprise two parts each of the two parts bearing one of the two forming faces, the two parts being held pressed against one another in a configuration where the two forming faces intersect in the die bottom fillet.

Thus, a method adapted for manufacturing of a composite profile comprising a thermoplastic polymer matrix and continuous fibers, the composite profile comprising, according to an extruded section, at least two legs extending in intersecting mean directions, the at least two legs being connected by an inward fillet on a concave side and by an outward fillet on a convex side, in which a radius of the outward fillet is less than or equal to a radius of the inward fillet, the method comprising steps of:
obtaining a blank adapted for obtaining the profile,
obtaining a tooling adapted to the stamping of the blank, and
stamping the blank using the tooling.

A stiffener comprising a composite profile comprising a thermoplastic polymer matrix and continuous fibers, obtained by the method wherein the composite profile comprises, in a running cross-section, at least two legs extending in intersecting directions, the at least two legs being connected on a concave side by an inward fillet and on a convex side by an outward fillet, a radius of the outward fillet being less than or equal to a radius of the inward fillet, the outward fillet being integral with the at least two legs and comprising unidirectional continuous reinforcing fibers extending parallel to a longitudinal direction of the composite profile.

In some embodiment, the radius of the outward fillet in the running section may be less than or equal to thickness of a thinnest of the at least two legs in the extruded section.

In some other embodiment, the radius of the outward fillet in the running section may be less than or equal to a half-thickness of a thinnest of the at least two legs in the extruded section.

In still some other embodiment, compatible with the previous ones, the stiffener may comprise two composite profiles assembled by a strong interface connection along one of their at least two legs.

The thermoplastic polymer matrix of the composite profile may be selected from polyetheretherketone (PEEK), polyetherketone (PEK), polyetherketoneketone (PEKK), low-melting-point polyaryletherketone (LMPAEK^{®}), polyetherimide (PEI), and polyphenylene sulfide (PPS).

The stiffener may be integrated into a composite stiffened panel comprising a first skin comprising a skin thermoplastic polymer matrix reinforced by continuous fibers and at least one stiffener comprising a stiffener thermoplastic polymer matrix, at least one stiffener comprising a flanges assembled to the first skin by a method selected from thermoplastic welding and co-consolidation of the skin with at least one stiffener.

The thermoplastic polymer matrix of the skin may be selected from a low-melting-point polyaryletherketone and a polyetherimide, and the thermoplastic polymer matrix is selected from PolyEtherEtherKetone (PEEK), PolyEtherKetone (PEK), PolyEtherKetoneKetone (PEKK), or a low-melting-point PolyArylEtherKetone, wherein the melting temperature of the skin thermoplastic polymer is lower than the melting temperature of the stiffener thermoplastic polymer.

A composite stiffened structure may comprise a first skin comprising a skin thermoplastic polymer matrix reinforced by continuous fibers and at least one stiffener comprising a stiffener thermoplastic polymer matrix, the at least one stiffener comprising a first flange assembled to the first skin by a method selected from thermoplastic welding and co-consolidation of the first skin with the at least one stiffener.

In some embodiment of the composite stiffened structure, the at least one stiffener may be a channel stiffener comprising a web and a second flange, the composite stiffened structure further comprising a second skin comprising a thermoplastic polymer matrix reinforced with continuous fibers, bonded to the second flange.

Thus, the stiffened panel may be incorporated into a composite box-type structure comprising a thermoplastic polymer matrix and continuous fibers, which includes a stiffened panel comprising at least one C-shaped stiffener and a second skin comprising a thermoplastic polymer matrix reinforced with continuous fibers, bonded to a second flange of the at least one C-shaped stiffener

### Brief description of the drawings

FIG. 1 to FIG. 11 illustrate different nonlimiting embodiments.
FIG. 1 relating to prior art shows, according to a cross-sectional view, an example of an assembly of a stiffener with a skin and an example of a cross-section of such a stiffener.
FIG. 2 shows, according to a cross section, different examples of a stiffener comprising a composite profile assembled with a skin according to aspects of the present disclosure.
FIG. 3 shows in partial perspective views, an example of a composite profile with two legs and an example of a composite profile with three legs according to aspects of the present disclosure.
FIG. 4 shows according to cross-sectional views 4A, 4B, 4C and 4D, some embodiments of a composite profile obtained by stamping according to aspects of the present disclosure.
FIG. 5 shows according to a perspective view and according to a sectional AA view defined on the perspective view, some embodiment of a blank for obtaining a composite profile by stamping according to aspects of the present disclosure.
FIG. 6 shows, in a simplified cross-sectional view, an example of a tooling for stamping a blank as shown in FIG. 5, and a perspective view of the resulting composite profile, according to some aspects of the present disclosure.
FIG. 7 shows from an elevation perspective view and a bottom perspective view, an example of a part comprising more than legs according to some aspects of the present disclosure.
FIG. 8 shows, in simplified sectional views, exemplary embodiments of toolings for stamping a composite profile comprising at least 3 legs according to some aspects of the present disclosure.
FIG. 9 shows in a simplified cross-sectional view, an example of a tooling used to manufacture a panel assembled by co-consolidation according to some aspects of the present disclosure.
FIG. 10 is a sectional view showing different relative radius values of outward fillets according to some aspects of the present disclosure.
FIG. 11 shows according to sectional views examples of laminations for implementing a method for making a thermoplastic stiffener and a stiffened panel comprising such a stiffener according to some aspects of the present disclosure.

### Detailed description

### Throughout the text:

A blank is a substantially planar workpiece intended to be shaped by stamping.

A profile is a part whose 3D shape may be obtained by swiping a section along a swiping line. The section may be of constant or variable dimension along the swiping line, the swiping line may be straight or curved.

A running section is a cross-section of a profile at one location along the swiping line.

A running section may comprise two or more legs, two legs may be connected by one or more webs.

A flange may be a leg or a web connecting the profile to another part such as a skin.

A profile may be obtained by stamping a blank.

Consolidation, for a lamination of plies pre-impregnated with a thermoplastic polymer, comprises degassing the lamination, bringing the lamination to a temperature equal to or higher than a melting point of the thermoplastic polymer, applying a pressure on the lamination so as to make the molten or pasty polymer creeping in the lamination and filling voids, cooling the lamination under a calibrated imposed thickness down to an adequate temperature where the polymer is solid enough. Such an operation, makes the fibrous plies integral and molecular chains of the polymer crossing the plies.

Deconsolidation comprises heating a lamination of fibrous plies in a thermoplastic polymer matrix, up to a temperature equal to or higher than a melting point of the thermoplastic polymer, so that the thermoplastic polymer viscosity is low enough to enable interlaminar slippage of the plies without any fiber breakage. Most of thermoplastic polymers undergo bulking (volume increase) during deconsolidation. After deconsolidation a lamination of plies in a thermoplastic polymer matrix may usually need to be reconsolidated in order to be cohesive and bear loads.

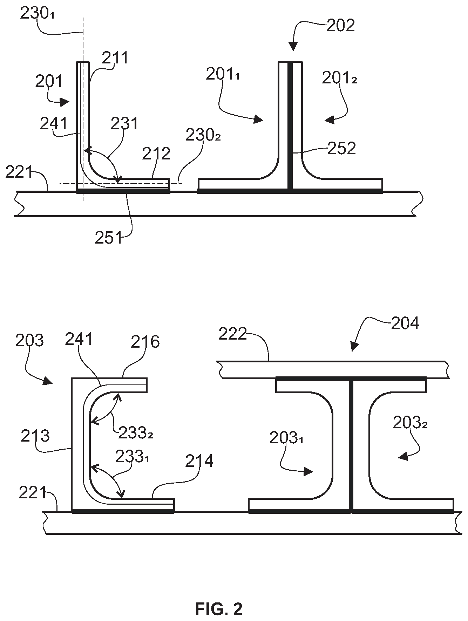

While the technical solution depicted in FIG. 1, may not be implemented for assembling a stiffener and a skin made of a composite material with a thermoplastic matrix, FIG. 2 shows some embodiment of a first stiffener (201) which may consist of an angle made of a composite material with a running section comprising two legs for example, a first leg (212), constituting a flange intended to be joined to another composite part such as a first skin (221), and a second leg (211), constituting a rib integral with the first leg. In a cross-section the legs extend in intersecting mean directions (230₁, 230₂), oriented relative to each other at a bending angle (231), measured on the concave side of the section, the bending angle may be equal to, less than or greater than 90°.

In the example shown, outside a bending area, the legs are of constant thickness and for each leg, a face located on the concave side of the leg may be parallel to a face of the leg located on the convex side of the section. However, this simplified representation cannot be limiting and each leg may have, in section, a varying thickness between the bending area and its end.

The mean direction is a line passing half-thickness of a leg in the cross-section.

The first skin (221) may consist of a composite material comprising a matrix made of a first thermoplastic polymer reinforced by fibers, for example continuous carbon or glass fibers, in the form of a laminate comprising several fibrous plies, the fibers included in these plies may be oriented in directions defined according to their position in the lamination.

The first stiffener (201) may also consist of a composite material comprising a matrix made of a second thermoplastic polymer, reinforced by continuous fibers, in the form of a lamination of fibrous reinforcement plies (241). At least some of the fibers comprised in the fibrous reinforcement plies extend into both legs.

The first thermoplastic polymer and the second thermoplastic polymer may be the same or different provided they are, at least partially, miscible in one another and may be selected from a PolyEtherEtherKetone (PEEK), a PolyEtherKetone (PEK), a PolyEtherKetoneKetone (PEKK), a PolyArylEtherKetone with a low melting point (LMPAEK^{®}), a PolyEtherlmide (PEI) and a PolyPhenylene Sulfide (PPS) for aeronautic applications.

One of the legs, i.e. the first leg of the angle may make a first flange (212) that may be bonded to the first skin (221) according to a strong bonding interface (251), by welding or co-consolidation, the molecular chains of the first and/or second polymers passing through the bonding interface over a distance greater than or equal to a distance between the fibrous plies, so that the fibrous plies, whether they are part of the first skin (221) or of the first leg making the first flange (212), participate in the cohesion of the interface and the load transfer between the first stiffener (201) and the first skin (221).

According to another exemplary embodiment, two first stiffeners (201₁, 201₂) may be connected by a second strong bonding interface (252) between the convex faces of their ribs so as to make a second stiffener (202) in the form of a composite Tee-shaped profile. This second stiffener (202) may be assembled by welding or co-consolidation to the skin by the legs of the composite profiles, making the flanges of the composite Tee-shaped profile.

According to another embodiment a third stiffener (203) may comprise two legs and a web with a running section in channel substantially in the shape of a U or a C. The stiffener may be a channel profile made of a composite material comprising a thermoplastic polymer matrix and fibrous reinforcement plies (241) at least part of the continuous fibers extending into the web and the two legs of the channel.

At least one of the two legs and the web may constitute a first flange (214) which may be bonded according to a strong bonding interface by welding or co-consolidation to the first skin (221). A web (213), extends between the first flange (214) and the second leg (216). The second leg (216) may also be a second flange that may be bond to a second skin (222). Such an arrangement may be used to make a composite stiffened structure such as a box-shaped structure.

Depending on the application, the web (213) may be linked by a strong bond to another composite part.

A first channel bending angle (233₁), measured between the first flange (214) and the web (213) on the concave side of the section, may be equal to, greater than, or less than 90°.

A second channel bending angle (233₂), measured between the web (213) and the second leg (216), on the concave side of the section, may be equal to, greater than or less than 90°. The second channel bending angle (233₂) may be equal to or different from the first channel bending angle (233₁).

According to come other embodiment, two channel profiles (203₁, 203₂) may be bonded by their webs according to a strong bond so as to make a fourth stiffener (204). The fourth stiffener (204) is thus a composite profile with a running section in I, having a web made by the assembly of the webs of two channel profiles, according to a strong bond, by welding or co-consolidation,

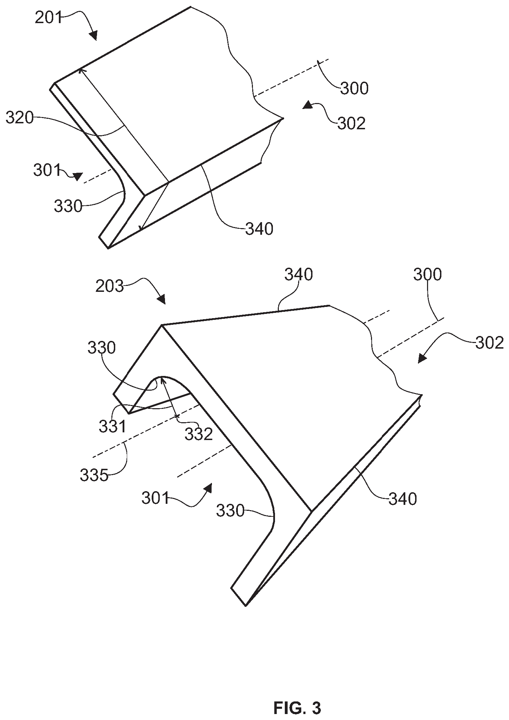

FIG. 3, the shape of the profile may correspond to a swipe of a running section along an swiping line parallel to a longitudinal direction (300). The swiping line may be straight or curved, and may comprise one or more joggling, within the technological limits of the manufacturing method. The running sections along the swiping line may be of the same dimension or of variable dimension, within the technological limits of the manufacturing method.

Thus, the profile may comprise, in a running section, a convex side (302) and a concave side (301).

Regardless the embodiment of the stiffener, the faces of two adjacent legs located on the concave side (301) of the composite profile are connected by an inward fillet (330).

The bending centers of the running sections are located on an inner bending line (335) that connects the centers (332) of the radiuses (331) of the inward fillets radiuses (330). The bending line may not be parallel to the longitudinal direction (300), for example, if the radius of the fillet evolves over the length of the composite profile, and may not be a straight line, particularly if the composite profile exhibits some curvature.

The faces of two adjacent legs on the convex side (302) of the profile are connected by an outward fillet (340).

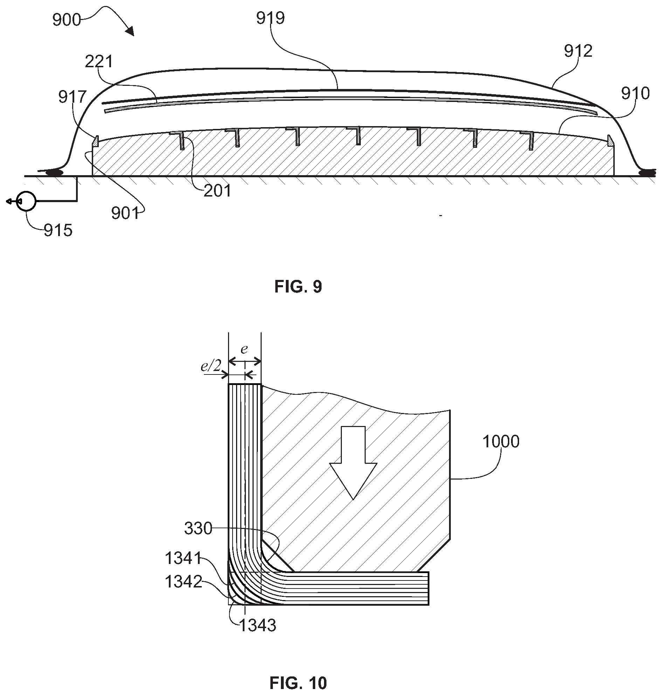

FIG. 10 obtaining an soutward fillet radius smaller than as defined by Math 1 is advantageous in several respects, in particular to increase the resistance of an assembly to the separation of the stiffener by peeling and crack opening propagation, or, during an assembly operation of the stiffener with another part, for example a skin, by welding or by co-consolidation, for improving the conditions of co-consolidation, or for improving the transmission of forces by the legs°/ flanges of the stiffener to the structures to which it is assembled with, in particular in compression.

According to some example, a radius of a first outward fillet (1341) may be less than or equal to a radius of the inward fillet (330) on the concave side. This configuration may increase the resistance of the assembly to the phenomenon of peeling and crack opening propagation.

According to some other example, a radius of a second outward fillet (1342) may be less than a thickness e of the thinnest leg of the two legs connected by the second outward fillet (1342). Such an embodiment makes it possible, in particular during a welding where the stiffener is applied to another part in a deconsolidated state, for example by means of a welding tool (1000), for the pressure applied by the welding tool not to distort the outward fillet by the pressure being actuall exerted over a near full length of the flange.

According to still some other example, a radius of a third outward fillet (1343) may be less than half a thickness (e/2) of the thinnest of the legs connected by the third outward fillet (1343). Such an embodiment enables to shift a contact point between the flange and a surface to which it is assembled beyond a neutral fiber of the thickest leg, which allows the transmission of a higher compression force through a free leg or a web to the flange, greatly reducing a risk of lateral bending instability of the free leg or the web.

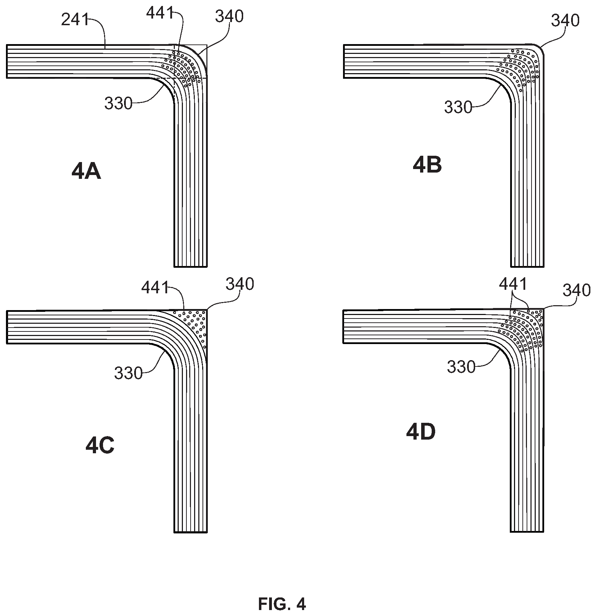

FIG. 4 according to some embodiment, 4A, unidirectional fibers plies (441) (symbolized by circles) extending in a direction parallel to the longitudinal direction may be inserted between the fibrous reinforcement plies (241) of the lamination during the tape laying of the blank, in an area intended to lay between the inward fillet (330) and the outward fillet (340). This embodiment makes it possible to keep such unidirectional fibers (441) in this connection area, despite the interlaminar slippage of the plies during a subsequent stamping operation, and thus to maintain a force transmission capability. Examples 4A, 4B and 4D schematically show the deformation of the fibrous reinforcement plies (241) in this area after shaping, and the absence of ripples or matrix squeezing out, due to the presence of these unidirectional plies of limited width in this area.

Such an embodiment makes it possible in 4B, to obtain outward fillet radiuses (340) much lower than a thickness of a leg, down to 1 mm or even 0.5 mm.

According to some other embodiment, 4C, unidirectional fiber plies (441) extending parallel to the longitudinal direction are superimposed on the lamination during tape laying of a planar blank, in an area intended to be the connecting area. This area is co-stamped and co-consolidated with the lamination of which it is part and, due to the presence of these unidirectional fibers (441), allows the transmission of forces. This second embodiment makes it possible to make an outward fillet of a very reduced radius, of less than 0.5 mm.

Still some other embodiment, 4D, may combine the two preceding embodiments. Such embodiment enables to reach outward fillet radiuses of the same order as the latter embodiment, 4C, disclosed above.

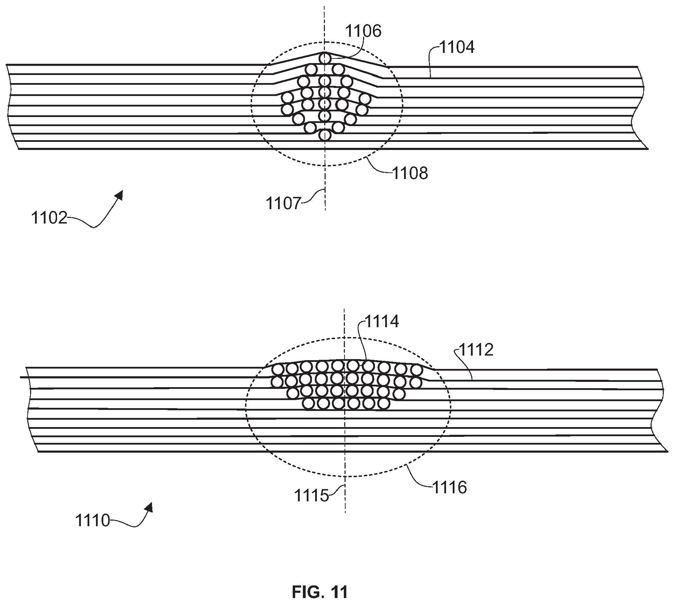

Fig. 11 shows two embodiment of a blank where the area of extra thickness (1108, 1116) is, at least partially, obtained by inserting unidirectional continuous fibers plies (1106, 1114) extending in a longitudinal direction over a reduced width, symmetrically on either side of an average bending surface (1107, 1115). The area of extra thickness is of a decreasing thickness on either side of the average bending surface.

According to some embodiment (1102) a width, in number of fibers of the unidirectional continuous fibers plies (1106) inserted between the plies (1104) of the first lamination, and making the area of extra thickness (1108) with a decreasing thickness on either side of the average bending surface (1107), may be distributed over a height of the blank according to a diamond shaped distribution. The following table gives an example of such a distribution of the width in a blank comprising a 112 plies lamination, where ply number 1 is in the concave side of the future profile.

In this example the initial lamination comprises 112 plies, and the extra-thickness adds 28 plies.

**Table 1:**

| Ply number | Width of the added ply (number of fibers) |
|---|---|
| 1 | 1 |
| 7 | 1 |
| 11 | 1 |
| 13 | 1 |
| 19 | 2 |
| 23 | 2 |
| 27 | 2 |
| 31 | 2 |
| 35 | 3 |
| 39 | 3 |
| 43 | 4 |
| 47 | 4 |
| 51 | 5 |
| 55 | 6 |
| 58 | 6 |
| 62 | 5 |
| 66 | 4 |
| 70 | 4 |
| 74 | 3 |
| 78 | 3 |
| 82 | 2 |
| 86 | 2 |
| 90 | 2 |
| 94 | 2 |
| 98 | 1 |
| 102 | 1 |
| 106 | 1 |
| 110 | 1 |

In some other embodiment (1110) a width, in number of fibers of the unidirectional continuous fibers plies (1114) inserted between the plies (1112) of the first lamination may be distributed over a height of the blank according to a triangular shaped distribution. The following table gives an example of such a distribution of the width in a blank comprising a 112 plies lamination, where ply number 1 is in the concave side of the future profile.

In this example the initial lamination comprises 112 plies, and the extra-thickness adds 11 plies.

**Table 2:**

| Ply number | Width of the added ply (number of fibers) |
|---|---|
| 113 | 5 |
| 114 | 6 |
| 115 | 7 |
| 116 | 7 |
| 117 | 7 |
| 118 | 7 |
| 119 | 7 |
| 120 | 7 |
| 121 | 7 |
| 122 | 7 |
| 123 | 7 |

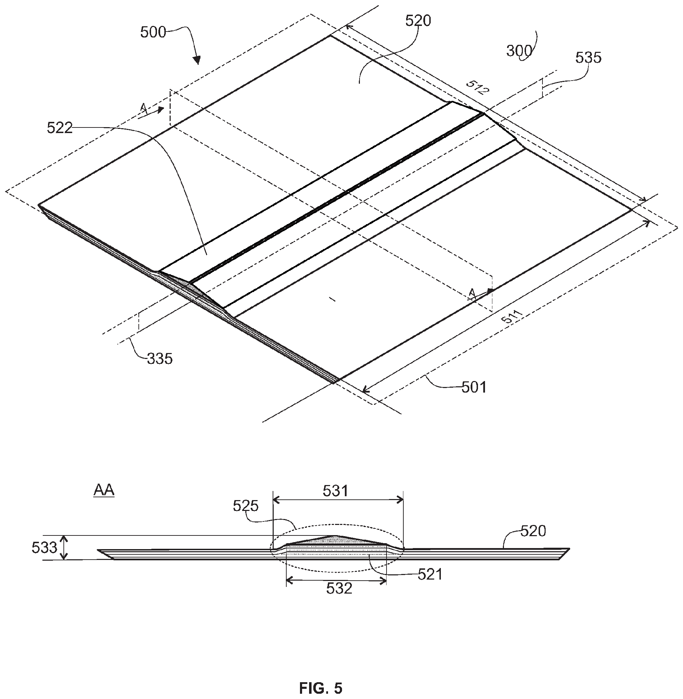

FIG. 5 regardless of the embodiment, the composite profile may be obtained by stamping a blank (500), between a punch and a paired stamping die.

The blank (500) may comprise a matrix made of a thermoplastic polymer and continuous reinforcing fibers, that is, fibers extending from one edge to another edge of the blank.

The blank (500) may be obtained by manual or automatic tape laying, on flat, of fibrous plies pre-impregnated with a thermoplastic polymer, the thermoplastic polymer may be integrated into the plies by filming, calendering, powdering or by comingled thermoplastic yarns, without these examples being limiting.

According to some embodiment, the planar blank (500) may be obtained by automatic fibers placement.

In the example of FIG. 5 the blank (500) is adapted to the manufacturing of a profile corresponding to the third embodiment, 4D, of FIG. 4.

The blank (500) may comprise a first lamination (520) of substantially quadrangular shape of continuous fibers extending along a mean plane (501), over a first width (512), constant or evolving, greater by 5% to 10% than a sum of the legs heights (320 FIG. 3) in the running sections of the profile, of a length (511), along the longitudinal direction (300), greater by 5% to 10% than a length of the profile and be of a constant or variable thickness reflecting an evolution of the running sections of the profile.

The first lamination (520) may comprise plies in the form of fabrics, nonwoven or unidirectional continuous fibers whose orientations may change from one ply to another.

Although not shown in FIG. 5 in order to simplify the representation, the person skilled in the art understands that the first lamination (520) may comprise plies drop-offs in the width direction and in the length direction to create legs / webs of varying thicknesses.

The blank (500) may comprise a second lamination (521) of a second reduced width (531), as compared to the first width (512), and may also comprise a third lamination (522) of a third reduced width (532) compared to the first width.

The second lamination (521) may comprise at least one ply of unidirectional continuous fibers extending parallel to the longitudinal direction (300) over a width less than or equal to the second reduced width (531) and interposed between two plies of the first lamination.

The third lamination (522) may comprise at least one ply of unidirectional continuous fibers extending parallel to the longitudinal direction (300) over a width less than or equal to the third reduced width (532) and superimposed on the first lamination.

Thus, the second lamination (521) and/or the third lamination (522) may make a localized area of extra thickness (525), comprising unidirectional fiber plies parallel to the longitudinal direction (300) and extending over the length (511) of the blank (500).

In a width direction, the area of extra thickness (525) features a decreasing thickness on either side of an average bending surface (535) extending from the lower bending line (335) to the top of the thickness of the blank.

This deaggressivity extends in width over the second reduced width (531) and/or the third reduced width (532) and depends on the radius of the outward fillet between the legs / webs of the profile, the target radius of the outward fillet as well as the bending angle. The deaggressivity may not be symmetrical on either side of the average bending surface (535).

The area of extra thickness (525), whether it comprises a second lamination (521) and/or a third lamination (522), is intended to create an area substantially in the shape of a wedge, integrated into the composite profile on its convex part, forming an outward fillet with a radius less than the thickness of the thickest leg / web of the legs / webs connected by the outward fillet upon stamping.

A height *h* (533) and a width *l* (4531, 532) of the area of extra thickness (522) are a function of the radius of the outward fillet (*r₁*), a thickness of the legs / webs (*e*) at this fillet and a bending angle *α* (233) corresponding to an angle between the legs on the concave side of the composite section and are given as a first approximation, for a running section, by: Math. 2: $l = \left({r}_{1}+e\right) \left(π-α\right)$ Math. 3: $h = \left({r}_{1}+e\right) \left(\frac{1}{cos \left(\frac{π - α}{2}\right)}-1\right)$

However, these values, as well as the relative contribution of the second lamination and the third lamination to the area of extra thickness, may be adjusted by trials and error and also depends on the tape laying technology and the minimum laying width allowed by the technology.

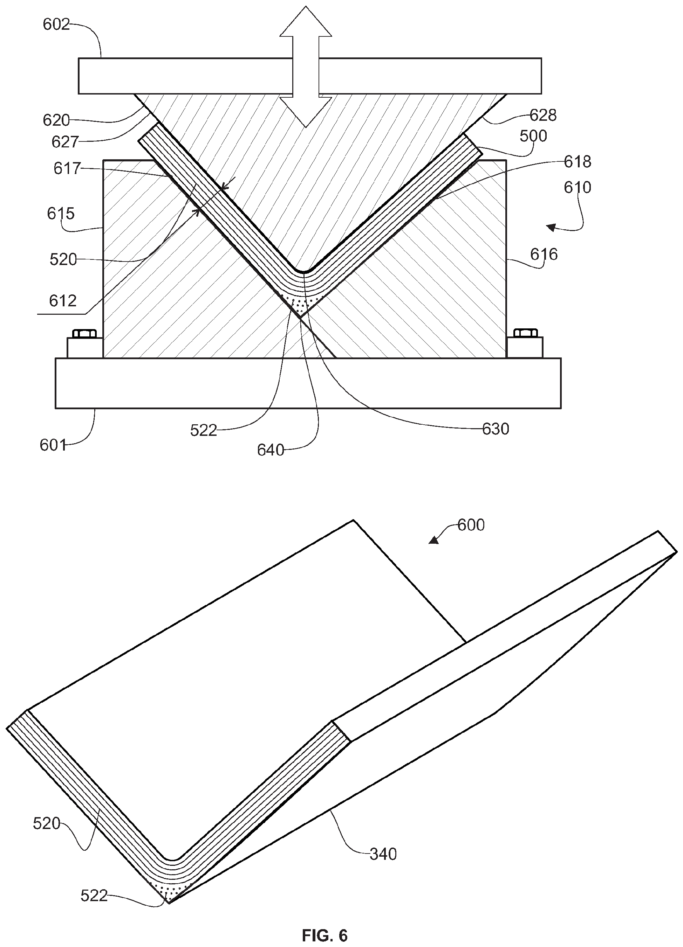

FIG. 6, the blank is intended to be hot-stamped so as to carry out the bending.

Following tape laying, the blank (500) is in a partially consolidated state, the stamping operation performs both the forming and the final consolidation of the composite profile (600). The final consolidation enables autohesion of the plies throughout the thickness of the profile, as well as the elimination of voids and porosities to achieve a porosity content less than 5% and preferrably less than 2% in the finished profile.

The stamping also gives the composite profile its final thickness.

The partially consolidated blank (500) is cohesive and does not require special storage. It may be easily stored, handled and shipped at room temperature, with no time limit, so that, in a manufacturing cycle, the blank may be made in a separate site which may be remote from the site in which the stamping is carried out.

Being rigid and cohesive, the blank is particularly suitable for an automated manufacturing process, including *"pick and place"* operations.

The method, known as direct stamping, from an unconsolidated or partially consolidated blank is described in particular in document EP 3 096 940 B1 / US 10,773,470 B2.

Prior to stamping, the blank (500) may be placed on a transfer device, for example a transfer frame as described, in document EP 4 349 560 B1. The blank (500) may be brought to a temperature equal to or greater than a melting temperature of the first thermoplastic polymer making the matrix of the profile, the blank may then be hot-stamped between a punch (620) and a paired stamping die (610). The forming is carried out by interlaminar slippage, made possible by the reduced viscosity of the polymer matrix at the heating temperature.

The profile is cooled down to a demolding temperature in the tooling, under a thickness imposed by an air gap (612) comprised between the punch walls and the stamping die walls. It may be further held in the air gap during a dwell time so as to consolidate in shape the composite profile (600) thus formed.

In the example of FIG. 6 the composite profile (600) corresponds to the second embodiment, 4C, of FIG. 4, comprising a third lamination (522) superimposed on the first lamination (520) but no second lamination inserted between plies of the first lamination.

According to some implementations, when the profile is made according to embodiment, 4C, or to embodiment, 4D, of FIG. 4 the third lamination (522) may be laid up at the bottom of the stamping die instead of being laid up over the first lamination (520).

According to this alternative embodiment, the third lamination (522) deposited at the bottom of the paired stamping die (610) may be integrated to the first lamination (520), integral therewith, during the reconsolidation under pressure carried out in the tooling, at the end of the stamping operation.

According to this implementation, it may be useful, but not essential, that the third lamination laid up at the bottom of the stamping die (610) comprises a thermoplastic polymer matrix consisting of a polymer miscible in the first thermoplastic polymer making the matrix of the first lamination (520) but whose melting temperature is less than a melting temperature of the first thermoplastic polymer.

The following table gives examples of selections of a first thermoplastic polymer which may make the matrix of the first lamination (520) and a second thermoplastic polymer which may make the matrix of the third lamination (522) deposited at the bottom of the stamping die (610):

**Table 3:**

| First polymer | Second polymer |
|---|---|
| PEEK | LMPAEK ^{®} |
| PEKK | LMPAEK ^{®} |
| PEEK | PEI |
| PEKK | PEI |
| LMPAEK ^{®} | PEI |

With PEEK: a PolyEtherEtherKetone with a melting temperature comprised between 294°C and 354°C; PEKK: a PolyEtherKetoneKetone with a melting temperature range between 310°C and 370°C and a melting temperature of 360°C; LMPAEK^{®}: a Low-melting-point PolyArylEtherKetone with a melting temperature comprised between 285°C and 320°C, PEI: a PolyEtherimide, an amorphous polymer with a glass transition temperature of 215°C to 230°C and a thermal degradation temperature of 530°C.

LMPAEK^{®} is a product marketed by: Victrex plc, Victrex Technology Centre, Hillhouse International, Thornton Cleveleys, Lancashire FY5 4QD, UK
Regardless of the embodiment of the composite profile and the implementation variant of the stamping method, the tooling comprises a punch (620) that may be mounted on a movable press platen (602), and a paired stamping die (610) that may be mounted on a fixed platent (601) of the press. The punch (620) may thus be brought close or apart from the paired stamping die (610) between a closed configuration and an open configuration of the tooling.

When the tooling is in the closed configuration, walls of punch and walls of the paired stamping die maybe distant by an air gap (612), which may be variable depending on the location of the measure. The air gap (612) defines the thickness of the consolidated composite profile.

The tooling may include other features (not shown) to ensure specific tension of the blank during stamping and avoiding the formation of creases as described in co-pending applications EP 4 617 047, EP 4 714 641 and EP 4 714 642.

When the bending angle is less than 90° or when thickness variations along the legs of the composite profile are likely to create interference with the punch during stamping or its removal, the punch (620) may comprise mobilities as described in document EP 4 261 000 B1.

During stamping, the faces on the concave side (301) of the future composite profile are in contact with the walls of the punch (620) along at least two faces (617, 618) wherein the at least two faces are connected by a punch fillet (630) in the area corresponding to the inward fillet between the concave sides of the composite profile (600).

The faces of the convex side (302) of the future composite profile (600) are in contact with the walls of the stamping die (610), according to at least two forming faces (627, 628) wherein the two forming faces are connected to each other, opposite the punch fillet (630), by a die bottom fillet (640) whose connecting radius corresponds to the radius of the outward fillet (340) of the profile (600).

According to an exemplary embodiment, the die bottom fillet (640) may be sought as an edge with a radius equal to or less than 0.5 mm and may be obtained by making the stamping die (610) in at least two parts (615, 616), each of these two parts bearing one of the forming faces (617, 618) and being held pressed against one another so that the forming faces intersect in the die bottom fillet. This configuration makes it possible to produce a matrix bottom fillet that may be sought as a sharp edge.

During the stamping operation, the third lamination (522) and the second lamination are co-consolidated with the first lamination (520) so that, in the composite profile (600), the two or three laminations are completely integrated into the same part.

Thus, the composite profile (600) comprises a wedge-shaped area corresponding to the third lamination (522) capable of transferring forces from/to the composite profile, in particular when the latter is assembled with a skin, thus offering better resistance of such an assembly to peeling and crack opening progression.

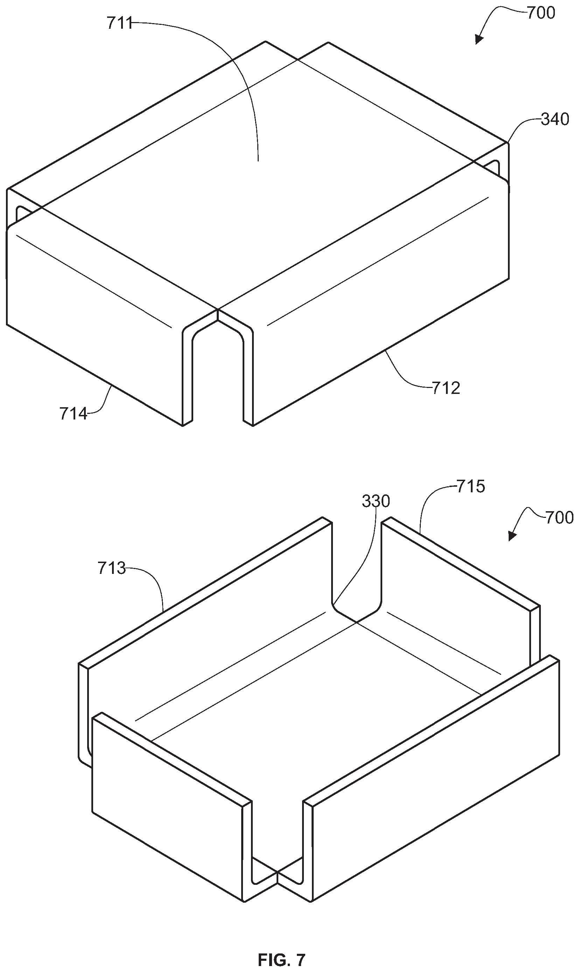

FIG. 7, the above description of the tooling and the stamping method are illustrated for the manufacturing of an angle-shaped stiffener. However, it may be adapted by a person skilled in the art to the manufacturing of a channel shaped stiffener, or to a part comprising more than two turned edges.

By way of example, the part (700) shown FIG. 7 comprises 4 turned edges and may be made by stamping using the method described above. Each turned edge (712, 713, 714, 715) may be integral with a central web (711) and may comprise a outward fillet (340) with a radius less than a radius of the inward fillet (330) connecting it to the central web (711) and less than a thickness of the turned edge (712, 713, 714, 715) and the central web (711).

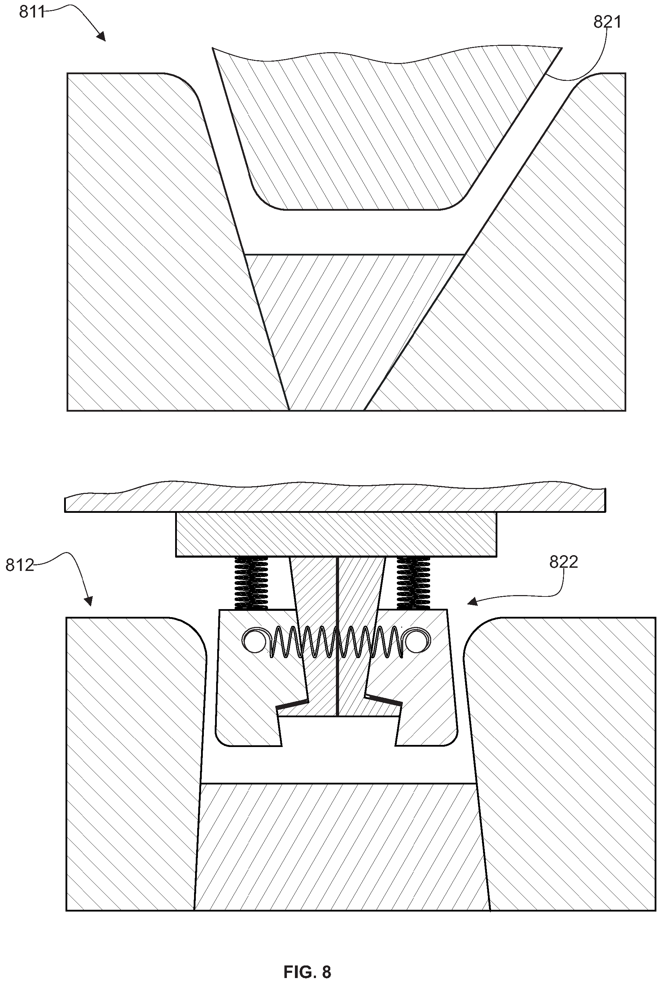

FIG. 8, when the stiffener comprises at least 3 legs and the bending angles are greater than 90° a first stamping die (811) comprising at least three blocks and a conventional punch may obtain the desired result.

When the stiffener comprises at least three legs and at least one bending angle is equal to or less than 90°, t'en a second stamping die (812) comprising at least three blocks, associated with a punch with mobilities (822), as described in document EP 4 261 000 B1, may obtain the intended result.

Returning to FIG. 2, assembling a stiffener with a skin by a strong bonding interface may be carried out by welding or by co-consolidation.

Welding may be carried out, for example, according to a method implementing infrared heating as described in document WO 2024/128912 A1.

The co-consolidation may be carried out according to a method as described in document EP 4 375 051 A1. According to this example, the skin polymer making the matrix of the skin, and the stiffener polymer making the matrix of the stiffener may be selected so that the two polymers are miscible into one another, and a melting temperature of the stiffener polymer is greater than a melting temperature of the skin polymer.

Table 4 gives examples of combinations:

**Table 4:**

| Stiffener polymer | Skin polymer |
|---|---|
| PEEK | LMPAEK ^{®} |
| PEKK | LMPAEK ^{®} |
| PEEK | PEI |
| PEKK | PEI |
| LMPAEK ^{®} | PEI |

FIG. 9, the co-consoliation may be carried out in a co-consolidation tool (900) comprising a shape (901) comprising notches to place the stiffeners (201) so that their flanges are flush with a surface (910) of the shape.

The unconsolidated first skin (221) may be placed on the surface (910) of the shape in contact with the stiffeners' flanges and a caul plate (919) placed on the skin.

The assembly is bagged in a tight tarpaulin (912) and placed in an oven to be heated to a temperature at least equal to a melting temperature of the skin polymer.

First, an enclosure comprised between the tarpaulin (912) and the shape (901) is evacuated using a suitable pump (915), which causes the first skin (221) to be pressed against the shape (901) and the flanges of the stiffeners via the caul plate (919).

The shape may comprise wedges (917) along its entire periphery so as to contain the molten skin polymer between the wedges (917) and the caul plate (919) during co-consolidation.

The two processes, welding and co-consolidation, may be combined, for example to make a composite stiffened structure, like a box-shaped structure where channel shaped stiffeners are assembled to make I-shaped stiffeners which may then be assembled by a first flange to a first skin by co-consolidation and a second skin, which may then be assembled on the second flanges by welding, in particular by welding by transparency implementing electromagnetic induction.

## Claims

1. A blank (500, 1102, 1110) for making a composite profile by stamping the blank (500), the composite profile (600) comprising a thermoplastic polymer matrix and continuous fibers, and comprising, in a running section, at least two legs (211, 212, 213, 214, 216, 711, 712, 713, 714, 715) extending in intersecting mean directions (230₁, 230₂) and connected by an inward fillet (330) on a concave side and by an outward fillet (340, 1341, 1342, 1342) on a convex side a radius of the outward fillet being less than or equal to a radius (331) of the inward fillet (330), the blank (500, 1102, 1110) comprising a first lamination (520, 1104, 1112) of plies (241) of continuous fibers, the first lamination (520) extending in a mean plane (521) over a first width (512), the blank comprising an area of extra thickness (525, 1108, 1116) comprising at least one ply of unidirectional fibers (441, 1106, 1114) oriented parallel to a longitudinal direction (300), of a reduced width (531, 532) relative to the first width (512) and of a decreasing thickness on either side of an average bending surface (535,1107, 1115), the area of extra thickness (525, 1108, 1116) being configured to make the outward fillet (340, 1341, 1342, 1343) upon stamping the blank (500) between a punch (620, 821, 822) and a paired stamping die (610, 811, 812).

2. The blank (500, 1102, 1110) of claim 1, wherein the area of extra thickness (525, 1108, 1116) comprises a second lamination (521) comprising at least one ply of continuous unidirectional fibers (441, 1106, 1114) inserted between two (1104, 1112) plies of the first lamination (520).

3. The blank (500) of claim 1 or claim 2, wherein the area of extra thickness (525) comprises a third lamination(522) comprising at least one ply of continuous unidirectional fibers (441) superimposed on the first lamination (520).

4. The blank (1102) of claim 2, wherein a distribution of a width of the second lamination (521) over a height of the first lamination follows a shaped distribution.

5. The blank (1110) of claim 2, wherein a distribution of a width of the second lamination over a height of the first lamination follows a triangular shaped distribution.

6. A tooling configured for stamping a blank (500, 1102, 1110) for making a composite profile comprising a thermoplastic polymer matrix and continuous fibers, and comprising, in a running section, at least two legs (211, 212 213, 214, 216, 711, 712, 713, 714, 715) extending in intersecting mean directions (230₁, 230₂) and connected by an inward fillet (330) on a concave side and by an outward fillet (340, 1341, 1342, 1343) on a convex side, a radius of the outward fillet being less than or equal to a radius (331) of the inward fillet (330), the tooling comprising a punch (620, 821, 822) and a paired stamping die, a press for bringing the punch close or apart from the paired stamping die (610, 811, 812), between an open configuration and a closed configuration, an air gap (612) configured to contain the composite profile between the punch and the paired stamping die in the closed configuration, wherein the punch comprises a connecting fillet (630) centered on an inner bending line between two faces of the punch forming a wedge, the paired stamping die comprising two forming faces, distant from the two faces of the punch by a thickness of the air gap (612) when the tooling is in the closed configuration, the two forming faces being connected by a die bottom fillet (640), wherein a radius of the die bottom fillet (640) is less than or equal to a radius of the connecting fillet (630).

7. The tooling of claim 6, wherein the paired stamping die comprises two parts each of the two parts (615, 616) bearing one of the two forming faces, the two parts (615, 616) being held pressed against one another in a configuration where the two forming faces intersect in the die bottom fillet (640).

8. A stiffener (201, 202, 203, 204) made by a composite profile comprising a thermoplastic polymer matrix and continuous fibers, the composite profile comprising, in a running section, at least two legs (211, 212, 213, 214, 216) extending in intersecting mean directions, the at least two legs being connected on a concave side (301) by an inward fillet (330) and on a convex side (302) by an outward fillet (340, 1341, 1342, 1343), a radius of the outward fillet being less than or equal to a radius (331) of the inward fillet (330), the outward fillet being integral with the at least two legs and comprising unidirectional continuous reinforcing fibers extending parallel to a longitudinal direction (300) of the composite profile.

9. The stiffener of claim 8, wherein the radius of the outward fillet (340, 1342, 1343) in the running section is less than or equal to a thickness of a thinnest of the at least two legs.

10. The stiffener of claim 9, wherein the radius of the outward fillet (340, 1343) is less than or equal to a half a thickness of a thinnest of the at least two legs.

11. The stiffener of claim 8, comprising two composite profiles (201₁, 201₂ 203₁, 203₂) assembled to one another by a strong interface bond (252) along one of their at least two legs.

12. The stiffener of claim 9, wherein the thermoplastic polymer matrix is selected among a PolyEtherEtherKetone (PEEK), a PolyEtherKetone (PEK), a PolyEtherKetoneKetone (PEKK), a PolyArylEtherKetone with a low melting point (LMPAEK^{®}), a PolyEtherlmide (PEI) and a PolyPhenylene Sulfide (PPS).

13. A composite stiffened structure comprising a first skin (221) comprising a skin thermoplastic polymer matrix reinforced by continuous fibers and at least one stiffener (201, 202, 203, 203) comprising a stiffener thermoplastic polymer matrix, the at least one stiffener comprising a first flange (212, 214) assembled to the first skin (221) by a method selected from thermoplastic welding and co-consolidation of the first skin with the at least one stiffener.

14. The composite stiffened structure of claim 13, wherein the skin thermoplastic polymer matrix may be selected from a low-melting-point polyaryletherketone and a polyetherimide, and the stiffener thermoplastic polymer matrix is selected from a PolyEtherEtherKetone (PEEK), a PolyEtherKetone (PEK), a PolyEtherKetoneKetone (PEKK), or a low-melting-point PolyArylEtherKetone and wherein a melting temperature of the skin thermoplastic polymer matrix is lower than a melting temperature of the stiffener thermoplastic polymer matrix.

15. The composite stiffened structure of claim 13, wherein the at least one stiffener is a channel stiffener (203, 204) comprising a web and a second flange (216), the composite stiffened structure further comprising a second skin (222) comprising a thermoplastic polymer matrix reinforced with continuous fibers, bonded to the second flange (216).
